# EUROPÄISCHE PATENTANMELDUNG

(11) **EP 1 840 422 A1**
(43) Veröffentlichungstag der Anmeldung: **03.10.2007**
(21) Anmeldenummer: 06025757.3
(22) Anmeldetag: 13.12.2006
(51) Int. Cl.: F16J 15/08

(54) **Zylinderkopfdichtung**

(30) Priorität: 29.03.2006 DE 102006014384
(71) Anmelder: ElringKlinger AG, 72581 Dettingen/Erms (DE)
(72) Erfinder: Schumacher, Thomas, 73585 Riederich (DE); Bendl, Klaus, 75038 Oberderdingen (DE); Schweizer, Peter, 72661 Grafenberg (DE)
(74) Vertreter: Bartels & Partner

(57) **Zusammenfassung**

1. Zylinderkopfdichtung
2. Bei einer Zylinderkopfdichtung (1) für einen Hubkolben-Verbrennungsmotor, mit zumindest einer eine Dichtungshauptebene definierenden Dichtungslage (21, 23, 25) aus metallischem Material, die zumindest eine Brennraum-Duchgangsöffnung (3) aufweist, an deren Rand ein kreisringförmiger Brennraum-Dichtbereich (15) vorgesehen ist, ist der Brennraum-Dichtbereich (15) derart höhenprofiliert, dass er, senkrecht zur Dichtungshauptebene gemessen, in unterschiedlichen Umfangsbereichen eine verschieden große Dicke aufweist.

## Beschreibung

Die Erfindung betrifft eine Zylinderkopfdichtung für einen Hubkolben-Verbrennungsmotor, mit zumindest einer eine Dichtungshauptebene definierenden Dichtungslage aus metallischem Material, die zumindest eine Brennraum-Durchgangsöffnung aufweist, an deren Rand ein kreisringförmiger Brennraum-Dichtbereich vorgesehen ist.

Solche Zylinderkopfdichtungen, die mittels Zylinderkopfschrauben zwischen einem Zylinderkopf und einem Motorblock eines Verbrennungsmotors einspannbar sind, sind Stand der Technik.

Um durch Anziehen der Zylinderkopfschrauben einen betreffenden Brennraum mit dem Brennraum-Dichtbereich der Zylinderkopfdichtung ringsum zuverlässig abzudichten, muss überall, d. h. über den gesamten Umfang des Brennraum-Dichtbereiches, eine hinreichend große Dichtflächenpressung gewährleistet sein. Aufgrund der im Motorbetrieb herrschenden und zeitlich veränderlichen Betriebsbedingungen ist es technisch schwierig, diese Anforderung zu erfüllen. Herrschende hohe Temperaturen und dynamische Dichtspaltbewegungen führen entlang des Umfanges des Brennraum-Dichtbereiches zu ungleichmäßiger Flächenpressung und damit zu einer Gefährdung der Betriebssicherheit der Zylinderkopfdichtung.

Aufgabe der Erfindung ist es, eine Zylinderkopfdichtung zu schaffen, bei der im montierten Zustand und beim Motorbetrieb eine über den Umfang des Brennraum-Dichtbereiches gleichmäßige Dichtflächenpressung gewährleistet ist.

Bei einer Zylinderkopfdichtung der eingangs genannten Art ist diese Aufgabe erfindungsgemäß dadurch gelöst, dass der Brennraum-Dichtbereich derart höhenprofiliert ist, dass er, senkrecht zur Dichtungshauptebene gemessen, in unterschiedlichen Umfangsbereichen eine verschieden große Dicke aufweist.

Dadurch, dass erfindungsgemäß eine bereichsweise unterschiedliche Dicke des am Dichtspalt wirksamen Dichtbereiches gegeben ist, was beim Montagevorgang durch Anziehen der Zylinderkopfschrauben zu einer örtlich unterschiedlichen Dichtflächenpressung führt, lassen sich die Einflüsse ausgleichen, die sich im Motorbetrieb dadurch ergeben, dass durch örtlich unterschiedliche thermische Belastungen dynamische Änderungen am Dichtungsspalt auftreten, die durch die örtlich unterschiedliche Wahl der Ausgangsdicke so kompensierbar sind, dass im Motorbetrieb eine Vergleichmäßigung der Dichtflächenpressung rings um den Umfang des Dichtbereiches eintritt. Dahingehende Effekte sind auch bereits bei statischen Änderungen betreffend die Dichtungsanordnungen bekannt geworden.

Zwar ist aus der DE 102 21 731 A1 ein metallischer Dichtring an sich bekannt, der eine umfängliche Höhenprofilierung aufweist. Dieser Dichtring bildet jedoch eine Abdichtung zwischen einer Zylinderlaufbuchse und einer im Inneren des Motorblockes gelegenen Dichtfläche. Dieser Dichtring befindet sich an einem vom Brennraum isolierten Ort, wo völlig andersartige Betriebsbedingungen herrschen als an dem an den Brennraum angrenzenden Brennraum-Dichtbereich einer Zylinderkopfdichtung. Es wurde jedoch gefunden, dass die erfindungsgemäß vorgesehene Höhenprofilierung speziell unter den am Brennraum-Dichtbereich herrschenden Betriebsbedingungen die erstrebte Vergleichmäßigung der Dichtflächenpressung beim Motorbetrieb ermöglicht.

Wenn, wie dies bei Zylinderkopfdichtungen zumeist der Fall ist, der jeweilige Brennraum-Dichtbereich von Schraubendurchgangsöffnungen für Zylinderkopfschrauben umgeben ist, die in einem Radialabstand vom Brennraum-Dichtbereich in Abständen voneinander angeordnet sind, weist der Brennraum-Dichtbereich vorzugsweise in den zwischen Schraubendurchgangsöffnungen gelegenen Umfangsbereichen eine größere Dicke auf als in den Schraubendurchgangsöffnungen näher gelegenen Umfangsbereichen. Hierbei liegt das Ausmaß der Dickenänderungen in Anpassung an die Materialsteifigkeit der Materialpartien, die zwischen den Bereichen der Schraubendurchgangsöffnungen, wo die Schraubenkraft eingeleitet wird, gelegen sind, bei praktischen Ausführungsbeispielen etwa im Mikrometerbereich, beispielsweise im Bereich von 20 bis 60 µm.

Die bereichsweise unterschiedlichen Dicken des Brennraum-Dichtbereiches können durch plastische Verformung erzeugt sein, beispielsweise durch Rollieren, durch Fließpressen oder durch Warmfließpressen.

Wenn in einer Dichtungslage eine entlang des Umfanges des Brennraum-Dichtbereiches umlaufende Sicke vorgesehen ist, kann diese als Beitrag zur Bildung der durch örtlich unterschiedliche Dicken des Brennraum-Dichtbereiches bewirkten Höhenprofilierung entlang des Umfanges eine unterschiedliche Geometrie und/oder unterschiedliche Werkstoffeigenschaften aufweisen. Wenn vor dem Einbau der Zylinderkopfdichtung, also zur Herstellung des Auslieferungszustandes, eine plastische Verformung im Brennraum-Dichtbereich durchgeführt wird, dann führt aufgrund unterschiedlicher Geometrie der Sicke oder örtlich unterschiedlicher Werkstoffeigenschaften, wie Steifigkeit, diese Verformung zu einer entsprechend gewünschten Höhenprofilierung.

Bei Zylinderkopfdichtungen, die durch einen Verbund aus mehreren Dichtungslagen gebildet sind, kann am Brennraum-Dichtbereich eine die Sicke enthaltende Lage von einer eine randseitige Einfassung des Brennraum-Dichtbereiches bildenden, über die Sicke umgelegten Lage überdeckt sein. Hierbei ergibt sich eine resultierende Höhenprofilierung aufgrund plastischer Verformung der an der Sicke anliegenden Dichtungslage oder-lagen sowie der Sicke selbst, wobei das Ausmaß der Verformung der Sicke durch die gegebenenfalls unterschiedliche Geometrie und die gegebenenfalls örtlich unterschiedliche Steifigkeit der Sicke beeinflußt wird.

Nachstehend ist die Erfindung anhand eines in der Zeichnung dargestellten Ausführungsbeispieles im einzelnen erläutert. Es zeigen:
- Fig. 1 eine abgebrochen gezeichnete Draufsicht einer Zylinderkopfdichtung gemäß einem Ausführungsbeispiel der Erfindung für einen Mehrzylindermotor;
- Fig. 2 einen gegenüber Fig. 1 stark vergrößert gezeichneten Teilschnitt entsprechend der Linie II-II in Fig. 1 und
- Fig. 3 eine Diagrammdarstellung zur Verdeutlichung einer beim Beispiel von Fig. 1 und 2 vorzusehenden Höhenprofilierung.

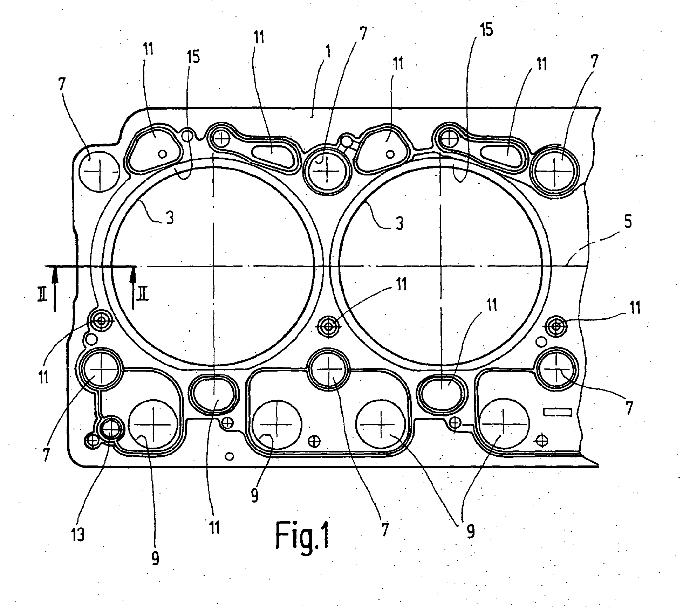

Die in Fig. 1 dargestellte Zylinderkopfdichtung 1 weist mehrere Brennraumöffnungen 3 für mehrere entlang einer Motorlängsachse 5 in Reihe angeordnete Motorzylinder auf, wobei in der abgebrochenen Darstellung von Fig. 1 lediglich die Brennraumöffnungen 3 für einen ersten und einen zweiten Zylinder zu sehen sind. Jeder Brennraumöffnung 3 sind rings um ihren Umfang verteilt mehrere von Dichtungsrändern umgebene Öffnungen oder Durchgänge zugeordnet, nämlich Schraubendurchgangsöffnungen 7, die in regelmäßig verteilter Lageanordnung die Brennraumöffnung 3 umgeben, sowie Durchgänge 9 für Ventilstössel. Außerdem sind von Dichtungsrändern umgebene Durchgänge 11 als Verbindung für Wasserkanäle sowie ein Ölkanaldurchgang 13 in der bei derartigen Zylinderkopfdichtungen üblichen Art vorgesehen.

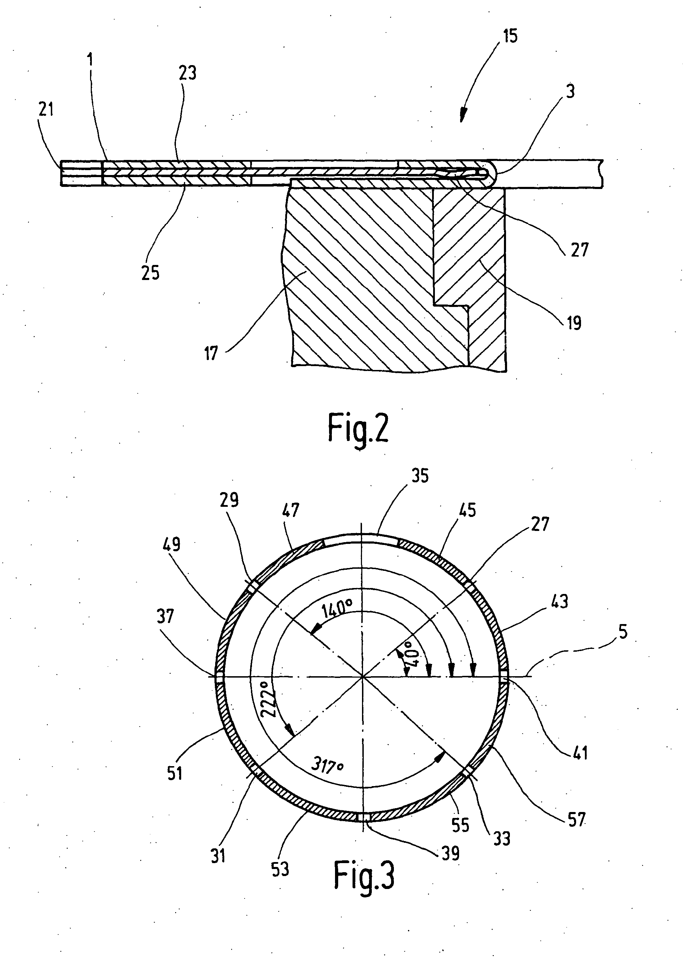

Am Rand der Brennraumöffnungen 3 bildet die Zylinderkopfdichtung 1 jeweils einen Brennraum-Dichtbereich 15, von dem nähere Einzelheiten nachstehend unter Bezug auf Fig. 2 und 3 beschrieben sind. Wie aus Fig. 2 zu ersehen, handelt es sich bei dem gezeigten Ausführungsbeispiel der Zylinderkopfdichtung 1 um einen Verbund aus mehreren metallischen Dichtungslagen, nämlich einer inneren Lage 21 mit äußerer Abstützung 23 und 25. Im montierten Zustand liegt die Zylinderkofpdichtung 1 auf dem Motorblock 17 so auf, dass sich der innere Rand der Brennraumöffnung 3, der den Brennraum-Abdichtbereich 15 bildet, oberhalb des oberen Randes der Zylinderlaufbuchse 19 des betreffenden Zylinders befindet, wobei die Oberseite der Zylinderlaufbuchse 19 bündig mit der Oberseite des Zylinderblockes 17 ist.

Im Brennraum-Abdichtbereich 15 befindet sich in der mittleren Lage 21 eine gegen den Motorblock 17 hin ausgewölbte Sicke 27, die sich entlang des gesamten Randes der Brennraumöffnung 3 umlaufend erstreckt. Bei der Herstellung der erfindungsgemäßen Zylinderkopfdichtung 1, um sie in den Auslieferungszustand vor der eigentlichen Montage zu bringen, erfolgt im Brennraum-Abdichtbereich 15 eine plastische Verformung. Diese ist so gestaltet, dass sich entlang des Umfanges der Brennraumöffnung 3 eine Höhenprofilierung ergibt, d. h. eine örtlich unterschiedliche Dicke, bevor die . Zylinderkopfdichtung 1 montiert, d. h. zwischen Zylinderkopf und Motorblock 17 eingespannt wird. Wie bereits erwähnt, kann diese Verformung durch ein Rollieren oder ein Fließpressen (kalt oder warm) in ausgewählten Umfangsabschnitten erfolgen. Hierbei ergibt sich neben der plastischen Verformung der an der Sicke 27 anliegenden Dichtungslagen 23, 25 ein entsprechendes örtlich unterschiedliches Flachdrücken der Sicke 27, so dass insgesamt ein Brennraum-Abdichtbereich 15 mit örtlich unterschiedlichen Dicken erhalten wird. Als Beitrag zur gewünschten Höhenprofilierung kann die Sicke 27 zusätzlich in unterschiedlichen Abschnitten unterschiedlich geformt, gewölbt oder mit unterschiedlichen Materialeigenschaften (Steifigkeit) versehen sein. In jedem Falle sind die örtlich unterschiedlichen Dicken des Brennraum-Dichtbereiches 15, bevor die Zylinderkopfdichtung 1 montiert wird, so gewählt, dass nach Anziehen der die Zylinderkopfdichtung 1 einspannenden Zylinderkopfschrauben (nicht dargestellt) und unter den im Motorbetrieb herrschenden Betriebsbedingungen eine gleichmäßige Dichtflächenpressung am Brennraum-Abdichtbereich 15 rings um die Brennraumöffnung 3 gegeben ist.

Die in Richtung zum Motorblock 17 hin kreisbogenartig ausgewölbte Sicke 27 befindet sich mit ihrer Scheitellinie oberhalb der Oberseite der Zylinderlaufbuchse 19, die im Motorblock 17 sitzt, wie in Fig. 2 gezeigt ist. Wie ebenfalls hieraus ersichtlich, befindet sich zwischen dem an die Sicke 27 angrenzenden Endrand der Lage 21 und der durch die Lagen 23, 25 gebildeten Umfassung der Lage 21 ein kleiner Zwischenraum, der eine eng begrenzte Relativbewegung der Lagen 21, 23 und 25 insbesondere zur Kompensation von Wärmedehnungen ermöglicht.

Fig. 3 zeigt ein Diagramm zur Verdeutlichung von eine gewünschte Höhenprofilierung ergebenden örtlichen Dickenänderungen des Brennraum-Dichtbereiches 15, wobei die Winkelpositionen entsprechender Bereiche relativ zur Motorlängsachse 5 in Winkelgrad angegeben sind. Dabei sind die jeweils auf Schraubendurchgangsöffnungen 7 ausgerichteten Bereiche mit 27, 29, 31 und 33 bezeichnet. Die dazwischen gelegenen Bereiche wiederum sind mit 35, 37, 39 und 41 bezeichnet. Die zwischen den vorgenannten Bereichen liegenden Übergangsbereiche wiederum sind mit 43, 45, 47, 49, 51, 53, 55 und 57 bezeichnet. Beim vorliegenden Beispiel sind die Betriebsbedingungen im Motorbetrieb derart, dass die Dicke in den auf die Schraubendurchgangsöffnungen 7 ausgerichteten Bereichen 27, 29, 31 und 33 am geringsten ist, während die Dicke in den Zwischenbereichen 35, 37, 39 und 41 demgegenüber erhöht ist, wobei in der Fig. 3 die dazwischen liegenden Übergangsbereiche 43, 45, 47, 49, 51, 53, 55 und 57 jeweils schraffiert angedeutet sind. Gegenüber den die geringste Dicke aufweisenden, auf die Zylinderkopfschrauben ausgerichteten Bereichen 29, 31, 33 und 41 sind die dazwischen liegenden Bereiche 35, 37, 39 und 41 bei einem praktischen Ausführungsbeispiel jeweils um etwa 40 bis 60 µm in ihrer Dicke vermindert.

Die den Anstieg und die Verringerung der Dicke kennzeichnenden, schraffierten Bereiche bilden jeweils einen sanften Anstieg oder Abfall, so dass die Dickenänderung zwischen den Bereichen quasi kontinuierlich oder absatzlos erfolgt.

Es versteht sich, dass die Erfindung, obgleich sie am Beispiel einer Zylinderkopfdichtung 1 für einen Mehrzylindermotor erläutert wurde, gleichermaßen für eine Zylinderkopfdichtung für lediglich einen Motorzylinder anwendbar ist oder für eine Ausführungsform, die für mehrere Motorzylinder jeweils eine eigene Dichtung in Nebeneinanderanordnung vorsieht.

## Patentansprüche

1. Zylinderkopfdichtung (1) für einen Hubkolben-Verbrennungsmotor, mit zumindest einer eine Dichtungshauptebene definierenden Dichtungslage (21, 23, 25) aus metallischem Material, die zumindest eine Brennraum-Durchgangsöffnung (3) aufweist, an deren Rand ein kreisringförmiger Brennraum-Dichtbereich (15) vorgesehen ist, **dadurch gekennzeichnet, dass** der Brennraum-Dichtbereich (15) derart höhenprofiliert ist, dass er, senkrecht zur Dichtungshauptebene gemessen, in unterschiedlichen Umfangsbereichen eine verschieden große Dicke aufweist.

2. Zylinderkopfdichtung nach Anspruch 1, **dadurch gekennzeichnet, dass** der jeweilige Brennraum-Dichtbereich (15) von Schraubendurchgangsöffnungen (7) für Zylinderkopfschrauben umgeben ist, die in einem Radialabstand vom Brennraum-Dichtbereich (15) in Abständen voneinander angeordnet sind, und dass der Brennraum-Dichtbereich in den zwischen Schraubendurchgangsöffnungen (7) gelegenen Umfangsbereichen (35, 37, 39, 41) eine größere Dicke aufweist als in den Schraubendurchgangsöffnungen (7) näher gelegenen Umfangsbereichen (27, 29, 31, 33).

3. Zylinderkopfdichtung nach Anspruch 2, **dadurch gekennzeichnet, dass** der Verlauf der durch unterschiedliche Dicken von Umfangsbereichen des Brennraum-Dichtbereiches (15) bewirkten Höhenprofilierung längs des Umfanges so gewählt ist, dass sich im eingebauten Zustand längs des Umfanges durchgehend eine gewünschte Dickflächenpressung ergibt.

4. Zylinderkopfdichtung nach Anspruch 2 oder 3, **dadurch gekennzeichnet, dass** die bereichsweise unterschiedlichen Dicken des Brennraum-Dichtbereiches (15) durch plastische Verformung erzeugt sind.

5. Zylinderkopfdichtung nach Anspruch 4, **dadurch gekennzeichnet, dass** die Verformung durch Rollieren erzeugt ist.

6. Zylinderkopfdichtung nach Anspruch 4, **dadurch gekennzeichnet, dass** die Verformung durch Fliespressen erzeugt ist.

7. Zylinderkopfdichtung nach einem der Ansprüche 4 bis 6, **dadurch gekennzeichnet, dass** in der Dichtungslage (21) eine entlang des Umfanges des Brennraum-Dichtbereiches (15) umlaufende Sicke (27) vorgesehen ist.

8. Zylinderkopfdichtung nach Anspruch 7, **dadurch gekennzeichnet, dass** die Sicke (27) als Beitrag zur Bildung der durch örtlich unterschiedliche Dicken des Brennraum-Dichtbereiches (15) bewirkten Höhenprofilierung entlang des Umfanges unterschiedliche Geometrie und/oder Werkstoffeigenschaften aufweist.

9. Zylinderkopfdichtung nach Anspruch 8, **dadurch gekennzeichnet, dass** sie ein Verbund aus mehreren Dichtungslagen (21, 23, 25) ist, wobei am Brennraum-Dichtbereich (15) eine die Sicke (27) enthaltende Lage (21) von zumindest einer die randseitige Einfassung des Brennraum-Dichtelementes (15) bildenden, über die Sicke (27) umgelegten Lage (23, 25) überdeckt ist.

10. Zylinderkopfdichtung nach Anspruch 9, **dadurch gekennzeichnet, dass** sich die über die Sicke (27) umgelegte Dichtungslage (23, 25) im wesentlichen über die Gesamtfläche der Zylinderkopfdichtung (1) erstreckt.

11. Zylinderkopfdichtung nach einem der Ansprüche 2 bis 10, **dadurch gekennzeichnet, dass** in den zwischen Schraubendurchgangsöffnungen (7) gelegenen Zwischenbereichen (35, 37, 39, 41) die Vergrößerung der Dicke in Anpassung an in diesen Bereichen herrschende unterschiedliche Betriebsbedingungen unterschiedlich groß gewählt ist.

12. Zylinderkopfdichtung nach einem der Ansprüche 1 bis 11, **dadurch gekennzeichnet, dass** Dickenänderungen zwischen Umfangsbereichen (29, 31, 33, 35, 37, 39, 41) jeweils in absatzlosem, sanftem Übergang erfolgen.

13. Verfahren zum Herstellen einer Zylinderkopfdichtung nach einem der Ansprüche 9 bis 12, **dadurch gekennzeichnet, dass** die Höhenprofilierung an dem Verbund aus mehreren Dichtungslagen (21, 23, 25) mittels eines Umformwerkzeuges vorgenommen wird, das von außen her auf den Verbund einwirkt, wobei am Brennraum-Dichtbereich (15) eine die Sicke (27) enthaltende Lage (21) von zumindest einer die randseitige Einfassung des Brennraum-Dichtelementes (15) bildenden, über die Sicke (27) umgelegten Lage (23, 25) überdeckt wird.
